# EUROPÄISCHE PATENTSCHRIFT

(11) **EP 0 565 740 B1**
(45) Veröffentlichungstag und Bekanntmachung des Hinweises auf die Patenterteilung: **10.01.1996**
(21) Anmeldenummer: 92106298.0
(22) Anmeldetag: 11.04.1992
(51) Int. Cl.: G01G 11/12

(54) **Verfahren und Vorrichtung zur Bestimmung der Förderstärke bei Bandwaagen**
Method and apparatus for determining the extraction flow rate of a belt weigher
Procédé et dispositif pour déterminer le débit d'extraction d'une bascule à courroie

(43) Veröffentlichungstag der Anmeldung: 20.10.1993
(73) Patentinhaber: CARL SCHENCK AG, D-64273 Darmstadt (DE)
(72) Erfinder: Müller, Norbert, W-6107 Reinheim 2 (DE)

(56) Entgegenhaltungen:
- EP-A- 0 349 975
- EP-A- 0 421 111
- DE-A- 3 910 028
- GB-A- 1 358 026

## Beschreibung

Die Erfindung betrifft ein Verfahren zur Bestimmung der Förderstärke bei Bandwaagen gemäß dem Oberbegriff des Patentanspruchs 1, sowie eine Einrichtung zur Durchführung dieses Verfahrens nach dem Oberbegriff des Patentanspruchs 8.

Bei der Erfassung und Überwachung des Stoffflusses innerhalb eines industriellen Produktionsprozesses ist es vielfach erforderlich, Materialströme quantitativ zu erfassen. Da Feststoffe als Materialströme vorwiegend auf Förderbändern transportiert werden, erfaßt man deren Masse häufig gravimetrisch durch Bandwaagen. Mit den Förderbandwaagen wird die Förderstärke in kg pro Sekunde oder Tonnen pro Stunde und die transportierte Materialmenge in kg bzw. Tonnen ermittelt.

Im Gegensatz zur Förderbandwaage, die den anfallenden Fördergutstrom lediglich messen soll, hat die Dosierbandwaage zusätzlich die Aufgabe, den Fördergutstrom aus einem Vorratsbehälter oder dergleichen in der gewünschten Förderstärke auszutragen. Dazu wird die Bandbeladung gemessen, die als Istwert mit einem Sollwert verglichen wird. Bei Änderungen der Bandbeladung durch eventuelle Schwankungen des Schüttgutgewichtes wird über eine Änderung der Bandgeschwindigkeit der Istwert auf den vorgegebenen Sollwert eingeregelt, so daß ein im Zeitdifferential gewichtskonstanter Materialstrom erzeugt wird. Derartige Bandwaagen als Dosier- oder Förderbandwaagen sind aus dem Kochsiek, Handbuch des Wägens, 1985, Seite 318 bis 323 vorbekannt. Dort ist unter anderem eine Förderbandwaage beschrieben, bei der ein endloses Transportband um eine Antriebs- und eine Umlenkrolle umläuft. Zwischen diesen beiden Rollen sind in einem bestimmten Abstand voneinander Tragrollen vorgesehen, auf die das mit Fördergut beladene Transportband abgestützt wird. Mindestens eine dieser Tragrollen ist als Wägestation ausgebildet und erfaßt die Bandbelastung bezogen auf einbestimmtes Teilstück des Förderbandes. Die als Wägestation ausgebildete Tragrolle wird auf mindestens eine Wägezelle abgestützt, die die Bandbeladung in ein entsprechendes elektrisches Signal umwandelt. Um aus dem Bandbeladungssignal die Förderstärke oder die Fördermenge bestimmen zu können, wird die Bandgeschwindigkeit mittels einer separaten Meßeinrichtung erfaßt und dieses Signal mit dem Bandbeladungssignal multipliziert, woraus sich die entsprechende Förderstärke ergibt. Dabei wird die Bandgeschwindigkeit mittels eines Reibrades am Förderband oder an einer vom Förderband angetriebenen Meßrolle gemessen und über einen Frequenzgeber ein Signal erzeugt, das der Bandgeschwindigkeit proportional ist. Bei einer anderen Ausführungsart einer Bandwaage wird eine Bandgeschwindigkeitsmessung beschrieben, bei der an einer der Wellen oder Meßrollen ein Frequenztachogenerator angekuppelt wird, der wiederum ein Signal liefert, das auch der Bandgeschwindigkeit proportional ist.

Die gleichen Erfassungseinrichtungen befinden sich auch an den Dosierbandwaagen, die allerdings aus der Bandbelastung und der Bandgeschwindigkeit die Istförderstärke ermitteln und daraus über einen Vergleich mit der Sollförderstärke eine Regelung der Bandgeschwindigkeit über den Bandantrieb bewirken. Bei allen Verfahren zur Feststellung der Förderstärke bei Dosierbandwaagen und Förderbandwaagen wird die Bandgeschwindigkeit durch von der Wägeeinrichtung unabhängige Sensorvorrichtungen erfaßt, die gleichzeitig auch separate Fehler- und Störquellen enthalten und auch einen beträchtlichen apparativen Aufwand erfordern.

Der Erfindung liegt deshalb die Aufgabe zugrunde, die Genauigkeit und Betriebssicherheit einer Bandwaage der eingangs genannten Art zu verbessern und dies bei gleichzeitiger Reduzierung des apparativen Aufwandes.

Diese Aufgabe wird durch die im Patentanspruch 1 und 8 angegebene Erfindung gelöst. Weiterbildungen und vorteilhafte Ausführungsbeispiele der Erfindung sind in den Unteransprüchen angegeben. Dem Kern der Erfindung liegt der Gedanke zugrunde, sowohl die Bandbeladung als auch die Bandgeschwindigkeit mittels einer einzigen Sensoreinrichtung festzustellen und dadurch die zusätzlichen Meßungenauigkeiten und Störanfälligkeiten bei der Verwendung einer zweiten Meßwerterfassungsvorrichtung auszuschließen. Deshalb wurde die von dem Transportband angetriebene Meßrolle mit einer Unwucht versehen, die periodisch eine zusätzliche Kraft auf die zur Messung der Bandbeladung-verwendete Wägezelle ausübt. Dieser zusätzliche periodische Kraftanteil im Bandbeladungssignal erfolgt proportional zur Bandgeschwindigkeit. Aus diesem zusätzlichen periodischen Kraftsignal kann mit einer einfachen Rechenschaltung sehr genau die Bandgeschwindigkeit ermittelt werden, so daß mit Hilfe der Erfassungseinrichtung für die Bandbeladung gleichzeitig auch die Bandgeschwindigkeit festgestellt werden kann.

Die Erfindung hat deshalb den Vorteil, daß durch den kompletten Wegfall einer Geschwindigkeitsmeßstelle eine wesentlich einfachere Installation einer Bandwaage innerhalb eines Förderbandsystems möglich ist. So ist eine derartige Bandwaage bereits durch den Einbau einer Wägestation nachrüstbar. Dabei ist es dann auch nicht mehr erforderlich, eine Geschwindigkeitsmeßvorrichtung einzurichten, zum Beispiel ein Reibradtacho mit dem Förderband in Verbindung zu bringen. So erfordern derartige Reibradtachos in jedem Falle eine gewisse Antriebsenergie, die bei geringer Reibung zwischen dem Meßrad und dem Förderband zu Schlupf und damit zu Geschwindigkeitsungenauigkeiten führen kann.

Insbesondere bietet die Erfindung auch den Vorteil, daß durch die Messung der Bandgeschwindigkeit durch eine Kraftmeßzelle stets der Meßort der Bandbeladung und der Bandgeschwindigkeit örtlich zusammenfallen, so daß die Fördergeschwindigkeit auch die tatsächliche Geschwindigkeit des Fördergutes ist. Es kann z. B. vorkommen, daß durch einen Bandschräglauf oder einem mechanischen-Spannungsausgleich im Förderband die erfaßbare Bandgeschwindigkeit von der Fördergeschwindigkeit abweicht. So liegt zum Beispiel beim Einsatz eines Reibradtachos das Reibrad in Laufrichtung des Förderbandes fast immer vor oder hinter der Meßrolle, die sich auf die Wägezelle abstützt. Dies ist in der Regel aus konstruktiven Gegebenheiten erforderlich, weil zwischen dem Obertrumm und dem Untertrumm nur ein geringer Abstand herrscht, der in vertikaler Richtung meist nur zur Unterbringung der Wägezelle ausreicht.

Die Erfindung besitzt darüber hinaus noch den Vorteil, daß sie gegenüber einer Ausführung, die einen Bandbeladungs-aufnehmer und einen Geschwindigkeitsaufnehmer besitzt, eine geringere Wartung und eine geringere Störanfälligkeit aufweist. Dies ergibt sich schon daraus, daß die Geschwindigkeitsaufnehmer aus radähnlichen Bauteilen bestehen, die von dem Förderband angetrieben werden und somit Verschleißteile darstellen. Im Gegensatz dazu basiert die Geschwindigkeitsaufnahme durch die Wägezelle auf einer verschleißfreien Kraftmessung mittels elastisch aufgehängter Verformungskörper in der Kraftmeßdose. Da die Wägezelle bereits in jedem Fall zur Messung der Bandbeladung erforderlich ist, verringert sich der apparative Aufwand einer derartigen Bandwaage erheblich, da das Wägeergebnis im Prinzip mit der Hälfte der Meßstellen ermittelbar ist.

Der durch die Erfindung notwendige Auswerteaufwand des Kraftmeßsignals, der in das Wägesignal und das periodisch überlagerte Unwuchtsignal getrennt werden muß, ist unwesentlich, da dies mit herkömmlichen elektronischen Schaltungen ohne großen Aufwand möglich ist. Im übrigen bedarf auch die Geschwindigkeitserfassung durch einen Tachogenerator einer elektronischen Auswertung, die die Anzahl der Impulse speichert und in einen geschwindigkeitsentsprechenden Wert umrechnet.

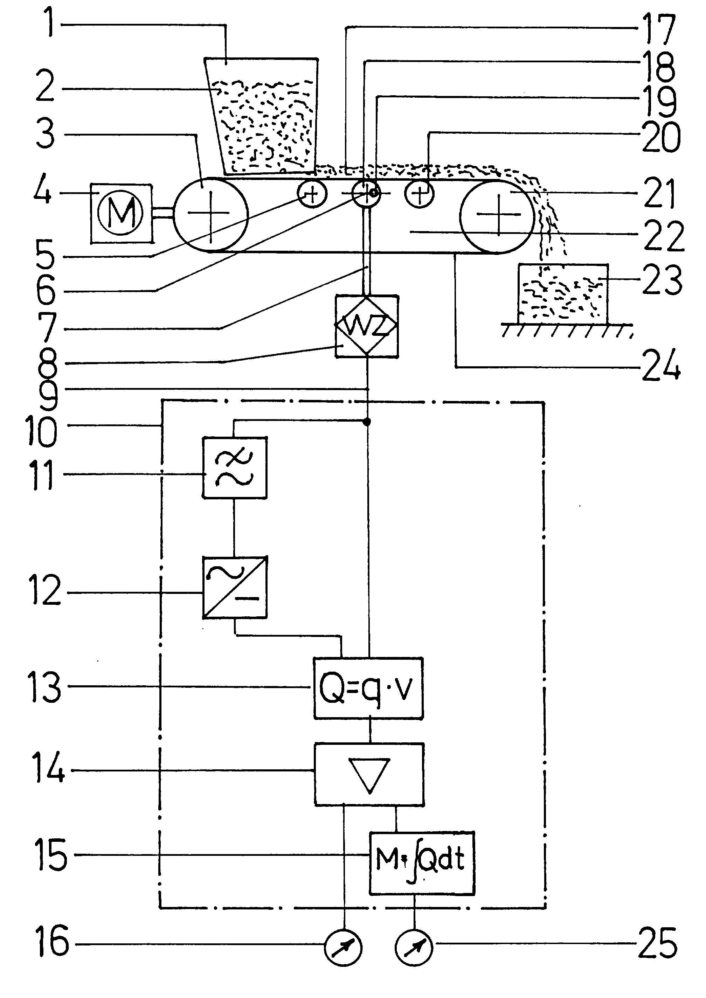

Die Erfindung wird anhand eines Ausführungsbeispiels, das in der Zeichnung dargestellt ist, näher erläutert. Die Zeichnung zeigt eine prinzipielle Darstellung einer elektromechanischen Förderbandwaage 22 mit einer Wägezelle 8 und das Blockschaltbild einer Auswerteeinrichtung 10, die die von der Wägezelle 8 gelieferten Signale in Förderstärken- und Fördermengenwerte umwandelt.

Die eigentliche Förderbandwaage 22 besteht im wesentlichen aus einer Meßrollenstation, die sich auf einer Wägezelle 8 abstützt und in beliebige Förderbandsysteme integrierbar ist. Grundsätzlich besteht ein Förderbandsystem aus einer Antriebs- 3 und einer Umlenktrommel 21, um die ein endloser Fördergurt 24 gespannt ist. Die Antriebstrommel 3 ist mit einem Elektromotor 4 gekoppelt, der das Fördergut bzw. das Förderband antreibt. Derartige Förderbandsysteme werden hauptsächlich zum Transport von Schüttgütern 2 verwandt. Dazu werden diese z. B. über einen Vorratsbehälter 1 auf das Förderband geleitet. Da sich das Förderband mit relativ konstanter Geschwindigkeit bewegt, wird auch ein relativ gleichmäßiger Schüttgutstrom 17 aus dem Vorratsbehälter 1 ausgetragen und beispielsweise zu einem weiter entfernt liegenden Sammelbehälter 23 transportiert.

Zwischen der Antriebs- 3 und der Umlenktrommel 21 desFörderbandsystems sind in der Regel eine Reihe von Rollen 5, 18, 20 angeordnet, auf die sich die Förderbandseite mit dem Schüttgutstrom 17 abstützt. Dabei sind die Rollen 5, 18, 20 in einem festen Abstand voneinander angeordnet, der von der maximalen Bandbelastung abhängig ist. Bei üblichen Förderbandsystemen liegt dieser Rollenabstand in einer Größenordnung von ca. 1 m. Bei einer Förderbandwaage ist nun mindestens eine dieser Rollen 5, 18, 20 als Meßrolle 18 ausgebildet, die den über diese Meßrolle 18 transportierten Schüttgutstrom 17 gravimetrisch erfaßt. Dazu werden eine oder mehrere Meßrollen 18 auf einer separaten Rahmenvorrichtung 7 befestigt, die die Meßrolle 18 bzw. die Meßrollen auf eine oder mehrere Wägezellen 8 abstützt. Eine derartige Meßstation stellt eine Wägebrücke dar. Diese besteht bei dem dargestellten Ausführungsbeispiel lediglich aus einer Meßrolle 18, die auf einer Wägezelle 8 abgestützt ist. Die erfindungsgemäße Meßrolle 18 besteht aus einem zylinderförmigen Hohlkörper, der um eine Drehachse 6 drehbar gelagert ist. Da die Meßrolle 18 so angeordnet ist, daß das Förderband mit seinem Bandbeladungsgewicht auf der Meßrolle 18 aufliegt, wird diese gleichzeitig durch das Förderband angetrieben. Die Meßrolle 18 läuft also mit einer Umfangsgeschwindigkeit um, die der Förderbandgeschwindigkeit entspricht. Im Innern der Meßrolle 18 ist ein definiertes Unwuchtgewicht 19 vorgesehen, das in einem bestimmten Abstand von der Drehachse 6 befestigt ist. Bei einem üblichen Meßrollendurchmesser von 100 mm sollte der Abstand zwischen der Drehachse 6 und dem Unwuchtmittelpunkt zweckmäßigerweise mindestens 25 mm betragen. Als Unwuchtmasse 19 ist ein Zusatzgewicht von mindestens 0,5 kg zweckmäßig. Dabei werden bei Bandgeschwindigkeiten von mindestens 0,3 m/sek noch gut messbare Unwuchtkräfte erzielt.

Die Unwuchtwirkung kann aber auch durch Zusatzgewichte an den Außenflächen der Meßrolle 18 erreicht werden. Darüber hinaus könnte die Meßrolle 18 auch mit einer Unwucht versehen werden, wenn sie gezielt exzentrisch gelagert wird, indem die Drehachse 6 so gewählt wird, daß diese nicht durch den Massenschwerpunkt verläuft. Dabei muß der Abstand zwischen der Massenträgheitsachse und der Drehachse so gewählt werden, daß die erreichbare Unwuchtkraft oberhalb der üblichen Gewichts- oder Störgrößenschwankungen liegt.

Die Wägezelle 8 ist elektrisch durch eine Verbindungsleitung 9 mit einer Auswerteeinrichtung 10 verbunden. Diese enthält eine Filterschaltung 11, die im wesentlichen als Tiefpaß ausgebildet ist. Darin wird das durch die Unwucht periodisch erzeugte Fliehkraftsignal aus dem Wägesignal selektiert. Dieses durch die Unwucht periodisch erzeugte Fliehkraftsignal ist im Idealfall sinusförmig und der Frequenz der Umlaufgeschwindigkeit der Meßrolle 18 proportional. Die Auswerteschaltung 10 enthält auch eine Wandlerschaltung 12, der das in der Filterschaltung 11 ausgefilterte Signal zugeführt wird. In der Wandlerschaltung 12 wird aus dem Wechselspannungssignal ein Gleichspannungssignal erzeugt, dessen Größe der Frequenz des Wechselspannungssignals proportional ist. Dieses Gleichspannungssignal wird einer Multiplizierschaltung 13 zugeführt, die gleichzeitig auch mit der Wägezelle 8 verbunden ist. Der Multiplizierschaltung 13 wird somit eingangsseitig ein Gewichtssignal, das proportional der jeweils gemessenen Bandbeladung ist, und ein Bandgeschwindigkeitssignal zugeführt. Daraus wird durch die Multiplizierschaltung 13 ein Förderstärkensignal gebildet, das ein Wert des geförderten Schüttgutes pro Zeiteinheit darstellt. Dieses Förderstärkensignal wird einer nachfolgenden Verstärkerschaltung 14 zugeführt, die dieses Signal entsprechend verstärkt, so daß es in einer nachfolgenden Anzeigeeinrichtung 16 als Wert der Förderstärke Q darstellbar ist.

Die Auswerteeinrichtung 10 verfügt zusätzlich noch über eine Integratorschaltung 15, die mit dem Ausgang der Verstärkerschaltung verbunden ist. In der Integratorschaltung 15 wird das Förderstärkensignal über die Zeit integriert, so daß daraus ein Ausgangssignal gebildet wird, das der Fördermenge M entspricht. Dieses Ausgangssignal kann gleichzeitig einer zweiten Anzeigeeinrichtung 25 zugeführt werden, die einen Wert der Fördermenge M anzeigt.

Die vorstehend beschriebene Einrichtung arbeitet wie folgt:

Beim Betrieb des Förderbandsystems wird der Materialstrom der Schüttgüter 2 oder anderer Bandbeladungsmaterialien mit relativ konstanter Geschwindigkeit durch das Förderband transportiert. Allerdings wird die Fördergeschwindigkeit sowohl von der Bandbeladung als auch von Netzfrequenzschwankungen oder Netzspannungsschwankungen beeinflußt, so daß die Förderstärke Q nur dann hinreichend genau ermittelbar ist, wenn diese Geschwindigkeitsschwankungen berücksichtigt werden.

Bei der Förderung von Schüttgütern 2 auf Förderbändern wird meist ein relativ konstanter Materialstrom angestrebt. Dadurch treten in der Regel immer nur relativ geringe Beladungsschwankungen auf. Beim Betrieb des Förderbandsystems mißt die Wägezelle also eine relativ kontinuierliche Bandbelastung eines bestimmten Bandabschnittes. Durch die Anbringung einer Unwucht 19 an der Meßrolle 18 wird die Wägezelle 8 periodisch mit einer zusätzlichen Fliehkraft be- und entlastet. Dieses Fliehkraftsignal überlagert das eigentliche Bandbeladungssignal periodisch so, daß sich deren negative und positive Anteile durch die zeitliche Integration des Wägezellensignals aufheben und daher den Förderstärkenwert nicht beeinflussen. üblicherweise arbeiten Förderbandsysteme mit Fördergeschwindigkeiten von ca. 0,5 bis 4 m/sek. Bei einem Meßrollendurchmesser von 100 mm und einem Unwuchtgewicht von z. B. 0,5 kg, das in der Meßrolle 18 befestigt wird, sind Fliehkräfte von mindestens einigen hundert Gramm erreichbar. Derartige Fliehkraftwerte liegen in jedem Fall erheblich über den vorkommenden Bandbeladungsschwankungen, und sind deshalb gut aus dem Bandbeladungssignal ausfilterbar und damit meßtechnisch auswertbar.

Beim Betrieb der Bandwaage erzeugt das laufende beladene Förderband eine Kraft auf die Meßrolle 18, die durch dessen Rahmenvorrichtung 7 auf die Wägezelle 8 übertragen wird. Dadurch erzeugt die Wägezelle 8 ein Bandbeladungssignal, das dem Gewicht eines bestimmten Bandabschnitts proportional ist. Diesen Bandbeladungssignal sind hochfrequente Störgrößen als auch das periodisch durch die Unwucht 19 erzeugte Signal überlagert. In der Auswerteschaltung 10 wird durch die Filterschaltung 11 das durch die Unwucht 19 erzeugte Signal herausgefiltert. Die Frequenz dieses periodischen Signals stellt unmittelbar einen der Bandgeschwindigkeit proportionalen Wert dar. Da sich die Förderstärke Q durch die Multiplikation der Bandbelastung q mit der jeweiligen Fördergutgeschwindigkeit v ergibt, wird der Frequenzwert der Fördergeschwindigkeit v durch die Wandlerschaltung 12 in eine analoge Ausgangsgröße umgewandelt. Diese analoge Größe wird der Multiplizierschaltung 13 zugeführt und mit dem Wägezellensignal multipliziert, das die jeweilige Bandbelastung q eines bestimmten Bandabschnitts wiedergibt. Am Ausgang der Multiplizierschaltung 13 liegt deshalb ein Signal an, das unmittelbar einem Wert der Förderstärke Q entspricht. Nach einer entsprechenden Verstärkung in einer Verstärkerschaltung 14 kann dieses Förderstärkensignal in einer Anzeigeeinrichtung 16 angezeigt werden. Durch eine Integration des Förderstärkensignals Q über der Zeit kann auch die Fördermenge M bestimmt werden. Dazu wird nach der Verstärkerschaltung 14 das Förderstärkensignal Q der Integratorschaltung 15 zugeführt, die die entsprechene Integration durchführt. Die Fördermenge M ist danach in einer zweiten Anzeigeeinrichtung 25 anzeigbar.

Es ist allerdings auch möglich, das Wägezellensignal mit Hilfe entsprechender digitaler Schaltungen auszuwerten, um dadurch die Förderstärke oder die Fördermenge zu ermitteln. Auch bei anderen Ausführungsarten von Bandwaagen kann die Förderstärke mit Hilfe einer Meßrolle ermittelt werden. So kann z. B. bei den Dosierbandwaagen durch eine entsprechende Meßstation die Istförderstärke in gleicher Weise ermittelt werden, wie die Förderstärke bei einer Förderbandwaage. Aus dem entsprechenden Bandbeladungssignal und dem zugehörigen Bandgeschwindigkeitssignal wird dabei die Istförderstärke errechnet, die dann mit einerSollförderstärke verglichen wird, woraus in einer speziellen Auswerteschaltung ein Regelsignal erzeugt werden kann, durch das die Antriebsgeschwindigkeit des Förderbandes entsprechend der Sollförderstärke regelbar ist.

## Patentansprüche

1. Verfahren zur Ermittlung der Förderstärke bei Bandwaagen (22), in dem die Bandbelastung (q) und die Bandgeschwindigkeit (v) ermittelt werden, woraus in einer Auswerteeinrichtung (10) die Förderstärke (Q) berechnet wird, wobei die Bandbelastung (q) durch mindestens eine Meßrolle (18), die sich auf mindestens einer Wägezelle (8) abstützt, gemessen wird, dadurch gekennzeichnet, daß die Bandgeschwindigkeit (v) dadurch ermittelt wird, daß die Meßrolle (18) mit einer Unwucht (19) versehen ist, die das durch die Bandbelastung (q) erzeugte Wägesignal mit einem periodischen Signal überlagert, dessen Frequenz ein Maß der Fördergeschwindigkeit (v) darstellt.

2. Verfahren zur Ermittlung der Förderstärke bei Bandwaagen nach Anspruch 1, dadurch gekennzeichnet, daß die Unwucht der Meßrolle dadurch erzeugt wird, daß die Drehachse nicht mit der Massenschwerpunktachse übereinstimmt.

3. Verfahren zur Ermittlung der Förderstärke bei Bandwaagen nach Anspruch 1 oder 2, dadurch gekennzeichnet, daß die Unwucht (19) der Meßrolle durch eine Unwuchtmasse innerhalb der Meßrolle (18) erzeugt wird.

4. Verfahren zur Ermittlung der Förderstärke bei Bandwaagen nach Anspruch 2, dadurch gekennzeichnet, daß die Drehachse (6) gegenüber der Achse, die durch den Mittelpunkt des zylinderförmigen Körpers der Meßrolle (18) verläuft, versetzt ist.

5. Verfahren zur Ermittlung der Förderstärke bei Bandwaagen nach einem der vorhergehenden Ansprüche, dadurch gekennzeichnet, daß die Bandwaage eine Förderbandwaage (22) darstellt, deren Wägezellensignal einer Auswerteschaltung (10) zugeführt wird, in der aus dem Wägesignal mit Hilfe einer Filterschaltung (11) das durch die Unwucht (19) erzeugte periodische Signal gewonnen wird und durch eine Wandlerschaltung (12) in ein der Bandgeschwindigkeit proportionales Gleichspannungssignal umgewandelt und mit dem der Bandbelastung (q) entsprechendes Signal in einer Multiplizierschaltung (13) verknüpft wird, daß daraus ein Signal entsteht, das der Förderstärke (Q) proportional ist und in einer Anzeigeeinrichtung (16) darstellbar ist.

6. Verfahren zur Ermittlung der Förderstärke bei Bandwaagen nach Anspruch 5, dadurch gekennzeichnet, daß das in der Auswerteschaltung (10) mit Hilfe einer Integratorschaltung (15) das Förderstärkensignal (Q) über die Zeit integriert wird, wodurch ein Signal erzeugt wird, das einen Wert der Fördermenge (M) darstellt und in einer nachfolgenden zweiten Anzeigeeinrichtung (25) anzeigbar ist.

7. Verfahren zur Ermittlung der Förderstärke bei Bandwaagen nach einem der Ansprüche 1 bis 4, dadurch gekennzeichnet, daß die Bandwaage eine Dosierbandwaage darstellt, bei der in einer speziellen Auswerteschaltung mit Hilfe einer Filterschaltung, einer Wandlerschaltung und einer Multiplizierschaltung ein Ist-Förderstärkensignal erzeugt wird, das durch eine Vergleicherschaltung mit einer vorgebbaren Soll-Förderstärke verglichen wird und bei einer Abweichung durch einen Regler ein Regelabweichungssignal erzeugt wird, durch das die Motorsteuerung die Bandgeschwindigkeit entsprechend der Regelabweichung verändert.

8. Vorrichtung zur Durchführung des Verfahrens nach einem der vorhergehenden Ansprüche 1 bis 6, bei der eine Förderbandwaage (22) vorgesehen ist, die aus mindestens einer Antriebstrommel (3) und einer Umlenktrommel (21) besteht, um die ein endloser Fördergurt (24) gespannt ist, wobei zwischen den beiden Trommeln (3, 21) in gewissen Abständen Rollen (5, 18, 20) angeordnet sind, auf der der Obertrumm des Fördergurts aufliegt, wobei wenigstens eine dieser Rollen (5, 18, 20) mit einer bestimmten Unwucht (19) versehen ist und eine Meßrolle (18) darstellt, die in einer Rahmenvorrichtung (7) befestigt ist, und sich auf wenigstens eine Wägezelle (8) abstützt, wobei die Wägezelle (8) ein elektrisches Signal erzeugt, das der Bandbeladung für einen bestimmten Bandabschnitt entspricht und bei einem angetriebenen Förderband von einem periodischen Signal überlagert wird, dessen Frequenz der Bandgeschwindigkeit entspricht, wobei die Wägezelle (8) mit einer elektronischen Auswerteschaltung (10) verbunden ist, die eine Filterschaltung (11), eine Wandlerschaltung (12), eine Multiplizierschaltung (13) und eine Verstärkerschaltung (14) enthält, an deren Ausgang ein Signal anliegt, das der Förderstärke (Q) des durch das Förderband transportierten Schüttgutes entspricht und in einer Anzeigevorrichtung (16) anzeigbar ist.

9. Vorrichtung nach Anspruch 8,bei der die Auswerteschaltung (10) eine Integratorschaltung (15) enthält, die aus dem Förderstärkensignal ein Signal erzeugt, das der in einem bestimmten Zeitraum durch das Förderband geförderten Fördermenge (M) entspricht, wobei die Integratorschaltung (15) mit einer zweiten Anzeigevorrichtung (25) verbunden ist, in der die Fördermenge (M) darstellbar ist.

10. Vorrichtung nach Anspruch 8, bei der die Auswerteschaltung (10) digitale elektronische Schaltkreise enthält, die die Frequenz des periodischen Signals und die Bandbelastung (q) in Digitalsignale umwandeln und so miteinander verknüpfen, daß am Ausgang Signale anliegen, die einen Wert der Förderstärke (Q) und/oder der Fördermenge (M) darstellen.

11. Vorrichtung nach Anspruch 8 zur Durführung des Verfahrens nach Anspruch 7, bei der die Wägezelle (8) mit einer speziellen Auswerteschaltung verbunden ist, die eine Filterschaltung, eine Wandlerschaltung, eine Multiplizierschaltung, eine Vergleicherschaltung und eine Regelschaltung enthält, aus der aus dem Ist-Förderstärkensignal und einem vorgebbaren Soll-Förderstärkensignal durch Vergleich ein Regelabweichungssignal erzeugbar ist, das den Antriebsmotor des Förderbandsystems steuert.

## Claims

1. Method for determining the rate of conveyance when using belt weighers (22), in which method the belt load (q) and the belt speed (v) are determined and from this determination the rate of conveyance (Q) is calculated in an evaluation device (10), the belt load (q) being measured by at least one measuring roller (18) which is supported on at least one load cell (8), characterised in that the belt speed (v) is determined by providing the measuring roller (18) with an out-of-balance component (19) which superimposes on the load signal produced by the belt load (q) a periodic signal whose frequency represents a measure of the conveying speed (v).

2. Method for determining the rate of conveyance when using belt weighers according to claim 1, characterised in that the out-of-balance component of the measuring roller is produced as a result of the axis of rotation not coinciding with the axis of the centre of mass.

3. Method for determining the rate of conveyance when using belt weighers according to claim 1 or 2, characterised in that the out-of-balance component (19) of the measuring roller is produced by an unbalanced mass within the measuring roller (18).

4. Method for determining the rate of conveyance when using belt weighers according to claim 2, characterised in that the axis of rotation (6) is staggered with respect to the axis which extends through the centre point of the cylindrical body of the measuring roller (18).

5. Method for determining the rate of conveyance when using belt weighers according to any one of the preceding claims, characterised in that the belt weigher represents a conveyor belt weigher (22), the load cell signal of which is delivered to an evaluation circuit (10) in which the periodic signal produced by the out-of-balance component (19) is obtained from the load signal by means of a filter circuit (11) and converted by a converter circuit (12) into a d.c. voltage signal which is proportional to the belt speed and combined with the signal corresponding to the belt load (q) in a multiplication circuit (13), and that the result is a signal which is proportional to the rate of conveyance (Q) and can be represented in a display device (16).

6. Method for determining the rate of conveyance when using belt weighers according to claim 5, characterised in that the rate of conveyance signal (Q) is integrated over time in the evaluation circuit (10) by means of an integrator circuit (15), resulting in the production of a signal which represents a value of the conveyed quantity (M) and can be displayed in a subsequent second display device (25).

7. Method for determining the rate of conveyance when using belt weighers according to any one of claims 1 to 4, characterised in that the belt weigher represents a feed-regulating belt weigher in which an actual rate of conveyance signal is produced in a special evaluation circuit by means of a filter circuit, a converter circuit and a multiplication circuit, which signal is compared by a comparator circuit with a predeterminable desired rate of conveyance and, should there be a difference, a controller produces an error signal via which the motor-speed control changes the belt speed in accordance with the error.

8. Device for carrying out the method according to any one of the preceding claims 1 to 6, comprising a conveyor belt weigher (22) consisting of at least one driving pulley (3) and one tail pulley (21), around which an endless conveyor belt (24) is stretched, rollers (5, 18, 20) being arranged at certain spacings between the two pulleys (3, 21), on which rollers the top run of the conveyor belt lies, at least one of these rollers (5, 18, 20) being provided with a certain out-of-balance component (19) and representing a measuring roller (18) which is secured in a frame device (7) and is supported on at least one load cell (8); the load cell (8) producing an electrical signal which corresponds to the belt load for a certain belt section and, given a driven conveyor belt, on which there is superimposed a periodic signal whose frequency corresponds to the belt speed, and the load cell (8) being connected to an electronic evaluation circuit (10) which comprises a filter circuit (11), a converter circuit (12), a multiplication circuit (13) and an amplifier circuit (14), at the output of which a signal results which corresponds to the rate of conveyance (Q) of the loose material transported by the conveyor belt and which can be displayed in a display device (16).

9. Device according to claim 8, in which the evaluation circuit (10) comprises an integrator circuit (15) which produces from the rate of conveyance signal a signal which corresponds to the quantity (M) conveyed by the conveyor belt in a certain period, the integrator circuit (15) being connected to a second display device (25), in which the conveyed quantity (M) can be represented.

10. Device according to claim 8, in which the evaluation circuit (10) comprises digital electronic switching circuits which convert the frequency of the periodic signal and the belt load (q) into digital signals and combine them such that signals result at the output which represent a value of the rate of conveyance (Q) and/or the conveyed quantity (M).

11. Device according to claim 8 for carrying out the method according to claim 7, in which the load cell (8) is connected to a special evaluation circuit which comprises a filter circuit, a converter circuit, a multiplication circuit, a comparator circuit and a control circuit from which an error signal which controls the drive motor of the conveyor belt system can be produced through a comparison of the actual rate of conveyance signal and a predeterminable desired rate of conveyance signal.

## Revendications

1. Procédé de détermination du débit de bascules à courroie (22) dans lequel sont déterminées la charge (q) de la courroie et la vitesse (v) de la courroie, à partir desquelles le débit d'extraction (Q) est calculé dans un dispositif d'exploitation, la charge (q) de la courroie étant mesurée par au moins un rouleau de mesure (18), qui prend appui sur au moins une cellule de pesée (8), caractérisé en ce que la vitesse (v) de la courroie est déterminée en ce que le rouleau de mesure (18) est pourvu d'un balourd (19), qui superpose au signal de pesée, produit par la charge (q) de la courroie, un signal périodique dont la fréquence constitue une mesure de la vitesse de transport (v).

2. Procédé de détermination du débit de bascules à courroie selon la revendication 1, caractérisé en ce que le balourd du rouleau de mesure est produit en ce que l'axe de rotation ne coïncide pas avec l'axe du centre de gravité des masses.

3. Procédé de détermination du débit de bascules à courroie selon les revendications 1 ou 2, caractérisé en ce que le balourd (19) du rouleau de mesure est produit par une masse de balourd à l'intérieur du rouleau de mesure (18).

4. Procédé de détermination du débit de bascules à courroie selon la revendication 2, caractérisé en ce que l'axe de rotation (6) est décalé par rapport à l'axe qui passe par le centre du corps cylindrique du rouleau de mesure (18).

5. Procédé de détermination du débit de bascules à courroie selon l'une des revendications précédentes, caractérisé en ce que la bascule à courroie est une bascule à courroie de transport (22), dont le signal des cellules de pesée est envoyé à un circuit d'exploitation (10), dans lequel à partir du signal de pesée, à l'aide d'un circuit de filtre (11), est obtenu le signal périodique, produit par le balourd (19), qui est converti par un circuit de convertisseur (12) dans un signal de tension continue proportionnel à la vitesse de la courroie et est corrélé dans un circuit de multiplicateur (13), avec le signal correspondant à la charge (q) de la courroie, en ce qu'il en résulte un signal qui est proportionnel au débit (Q) et qui peut être représenté dans un dispositif d'affichage (16).

6. Procédé de détermination du débit de bascules à courroie selon la revendication 5, caractérisé en ce que le signal de débit (Q) est intégré en fonction du temps, dans le circuit d'exploitation (10), à l'aide d'un circuit d'intégrateur 15), ce qui fait qu'un signal est produit qui représente une valeur de la quantité transportée (M) et qui peut être affiché dans un second dispositif d'affichage (25) suivant.

7. Procédé de détermination du débit de bascules à courroie selon l'une des revendications 1 à 4, caractérisé en ce que la bascule à courroie constitue une bascule à courroie de dosage, dans laquelle, dans un circuit d'exploitation spécial, à l'aide d'un circuit de filtre, d'un circuit de convertisseur et d'un circuit de multiplicateur, il est produit un signal de débit réel, qui est comparé par un circuit de comparateur, à un débit de consigne donné, et en cas d'écart, un régulateur produit un signal d'écart de régulation, par lequel la commande du moteur modifie la vitesse de la courroie en fonction de l'écart de régulation.

8. Dispositif de mise en oeuvre du procédé selon l'une des revendications 1 à 6, dans lequel est prévue une bascule à courroie de transport (22), qui est constituée d'au moins un tambour d'entraînement (3) et d'un tambour de renvoi (21), autour desquels passe une courroie de transport (24) sans fin, dans lequel entre les deux tambours (3, 21) sont prévus, à certaines distances, des rouleaux (5, 18, 20), sur lesquels repose le brin supérieur de la courroie de transport, dans lequel l'un au moins de ces rouleaux (5, 18, 20) est pourvu d'un certain balourd (19) et constitue un rouleau de mesure (18), qui est fixé dans un dispositif à cadre (7), et prend appui sur au moins une cellule de pesée (8), dans lequel la cellule de pesée (8) produit un signal électrique, qui correspond à la charge de la courroie pour une portion de courroie déterminée et, dans le cas d'une courroie de transport entraînée, à ce signal se superpose un signal périodique dont la fréquence correspond à la vitesse de la courroie, dans lequel la cellule de pesée (8) est reliée à un circuit d'exploitation électronique (10), qui contient un circuit de filtre (11), un circuit de convertisseur (12), un circuit de multiplicateur (13) et un circuit d'amplificateur (14), à la sortie duquel s'applique un signal, qui correspond au débit (Q) du produit en vrac transporté par la courroie de transport et qui peut être affiché dans un dispositif d'affichage (16).

9. Dispositif selon la revendication 8, dans lequel le circuit d'exploitation (10) contient un circuit d'intégrateur (15), qui produit, à partir du signal de débit, un signal, qui correspond à la quantité (M) transportée dans un intervalle de temps déterminé par la courroie de transport, dans lequel le circuit d'intégrateur (15) est relié à un deuxième dispositif d'affichage (25), dans lequel peut être représentée la quantité transportée (M).

10. Dispositif selon la revendication 8, dans lequel le circuit d'exploitation (10) contient des circuits électroniques numériques, qui convertissent la fréquence du signal périodique et la charge (q) de la courroie en signaux numériques et sont reliés entre eux de manière qu'à la sortie s'appliquent des signaux, qui représentent une valeur du débit (Q) et/ou de la quantité transportée (M).

11. Dispositif selon la revendication 8 pour la mise en oeuvre du procédé selon la revendication 7, dans lequel la cellule de pesée (8) est reliée à un circuit d'exploitation spécial, qui contient un circuit de filtre, un circuit de convertisseur, un circuit de multiplicateur, un circuit de comparateur et un circuit de régulation, à partir duquel peut être produit, à partir du signal de débit réel et d'un signal de débit de consigne donné, par comparaison, un signal d'écart de régulation, qui commande le moteur d'entraînement du système à courroie de transport.
